# EUROPEAN PATENT APPLICATION

(11) **EP 1 020 322 A2**
(43) Date of publication of application: **19.07.2000**
(21) Application number: 00100670.9
(22) Date of filing: 13.01.2000
(51) Int. Cl.: B60N 2/48

(54) **Vehicle seat headrest**

(30) Priority: 15.01.1999 IT TO990031
(71) Applicant: GESTIND-M.B." MANIFATTURA DI BRUZOLO" S.P.A, I-10050 Bruzolo (Torino) (IT)
(72) Inventor: De Filippo, Emilio, 10050 Bruzolo (IT)
(74) Representative: Jorio, Paolo

(57) **Abstract**

A headrest (1) for a vehicle seat (2) has a supporting body (3) for the user's head; a pair of supporting rods (4) hinged to the supporting body (3) to rotate about a hinge axis (25), and connected to a seatback (5) of the relative seat (2); and a step adjusting device (27) for adjusting the position of the supporting body (3) with respect to the rods (4) about the hinge axis (25); the adjusting device (27) having, for each rod (4), a first (28) and a second (29) sector gear connected integrally to the supporting body (3) and to the relative rod (4) respectively, and at least one of which is elastically deformable to enable the sector gears (28) (29) to rotate in steps with respect to each other.

## Description

The present invention relates to a vehicle seat headrest.

More specifically, the present invention relates to a headrest of the type comprising a supporting body for the user's head; a pair of rods for supporting the supporting body and connected to the backrest of the relative seat; hinge means interposed between the rods and the supporting body to permit rotation of the supporting body with respect to the rods about a substantially horizontal hinge axis; and adjusting means for adjusting the position of the supporting body about said hinge axis.

The supporting body of known headrests of the above type is adjusted about the hinge axis by means of a rack and a fixed reference projection for selectively engaging the gaps on the rack. To move the projection from one gap to another on the rack, the rack is fitted to a slide, which in turn is fitted to a fixed guide to slide to and from the projection, and is pushed towards the projection by a metal forcing spring.

Though widely used, known headrests of the above type have the drawback of comprising a fairly large number of component parts, and therefore involving a good deal of time and cost to produce and assemble.

Another drawback of known headrests lies in the movement of the projection from one gap to another on the rack being necessarily accompanied by an upward movement of the supporting body with respect to the rods. Which upward movement inevitably causes a certain amount of discomfort, especially when the seat is occupied by the user, and in many cases is difficult to perform by inevitably resulting in an undesired height adjustment of the supporting body with respect to the seat. By way of a solution to the problem, some headrests feature locking devices for preventing axial movement of the supporting body with respect to the rods, at least when adjusting the angular position of the supporting body. Such headrests, however, are particularly complicated and expensive.

It is an object of the present invention to provide a vehicle seat headrest designed to eliminate the aforementioned drawbacks in a straightforward, low-cost manner, and which, in particular, is cheap and easy to produce, provides for a high degree of efficiency and reliability, and is noisefree.

According to the present invention, there is provided a headrest for a vehicle seat, comprising a supporting body for the user's head; a pair of rods for supporting the supporting body and connected to a backrest of a relative seat; hinge connecting means for connecting said supporting body to said rods in rotary manner about a hinge axis; and adjusting means for adjusting the position of said supporting body with respect to said rods about said hinge axis; characterized in that said adjusting means are step adjusting means, and comprise, for each said rod, a first and a second sector gear cooperating mutually in sliding manner and connected integrally to said supporting body and to the relative said rod respectively; at least one of said sector gears being elastically deformable to enable said sector gears to rotate in steps with respect to each other.

A non-limiting embodiment of the invention will be described by way of example with reference to the accompanying drawings, in which:

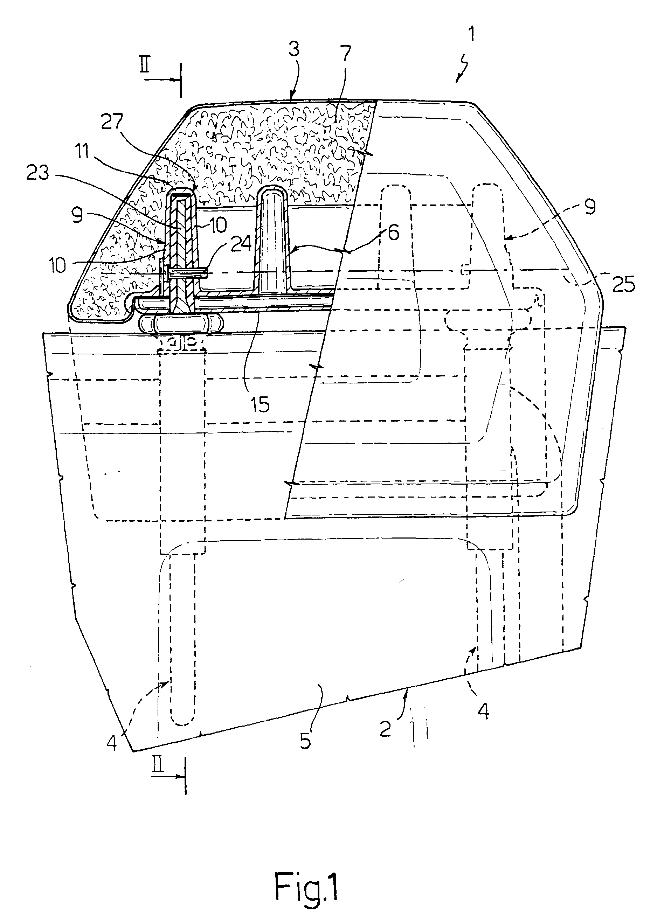

Figure 1 shows a partly sectioned front view of a preferred embodiment of the headrest according to the present invention, as fitted to a vehicle seat shown partly;
Figure 2 shows a larger-scale section along line II-II in Figure 1;
Figure 3 shows the same view as in Figure 2, of a variation of a detail in Figure 2.

Number 1 in the accompanying drawings indicates a headrest for a seat 2 (shown partly) of a vehicle (not shown). Headrest 1 comprises a supporting body 3 for the user's head, and a pair of rods 4 connecting supporting body 3 to the seatback 5 of seat 2.

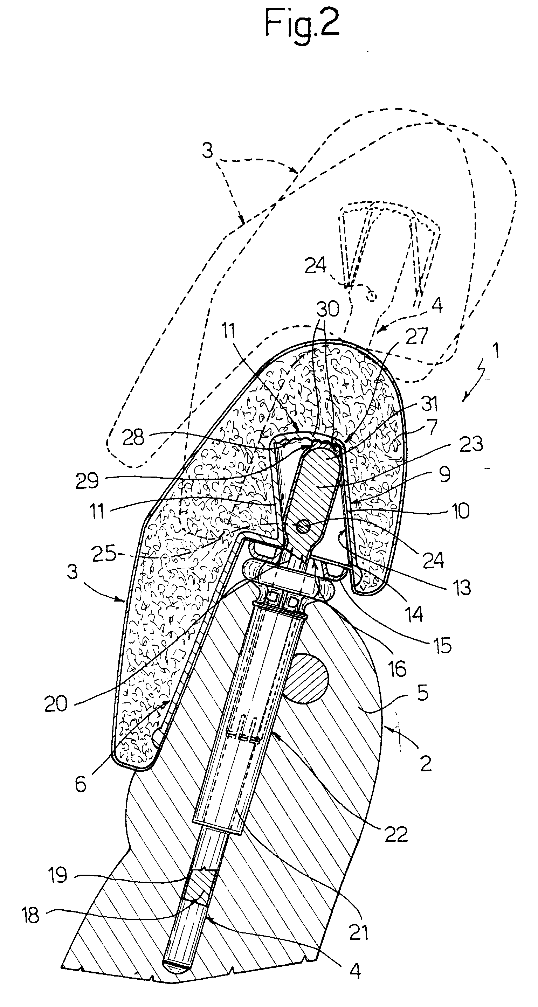

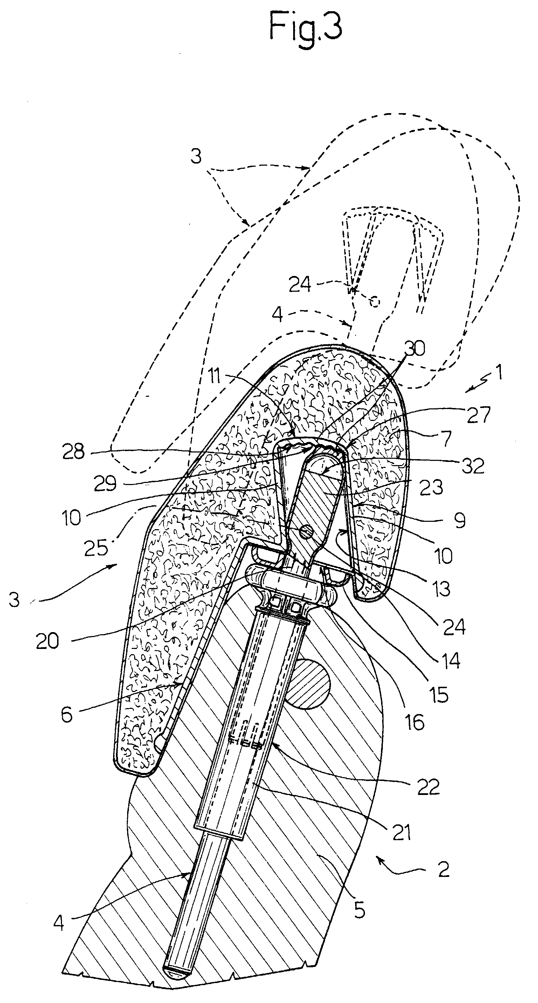

Body 3 comprises a shaped frame 6 formed in one piece from plastic material - conveniently polyethylene or polypropylene or any other elastically yielding or deformable material - and covered with a cushion 7 preferably made of foam material. Frame 6 comprises, for each rod 4, a respective cup-shaped portion 9 in turn comprising two parallel, facing lateral walls 10 and an end wall 11. Each cup-shaped portion 9 defines a respective cavity 13 (Figures 2 and 3) having an inlet 14 facing seatback 5 and closed by an elongated element 15 having a pair of holes 16 through which each cavity 13 communicates with the outside.

Each rod 4 comprises a core 18 of metal material covered with a known layer 19 of elastically yielding or deformable material (Figure 2), and has a cylindrical portion 20 engaging in sliding manner respective hole 16 and a respective bush 21 extending inside backrest 5 and forming part of a known adjustable connecting assembly 22 not described in detail. Each rod 4 also comprises a respective flat end portion 23 extending inside respective cavity 13 and having an intermediate portion adjacent to element 15 and hinged to walls 10 by a respective hinge pin 24 extending through walls 10 along a substantially horizontal hinge axis 25.

As shown in the accompanying drawings, and particularly in Figure 2, headrest 1 also comprises a step adjusting device 27 for adjusting, in use, the position of body 3 with respect to seat 2 and rods 4 and about hinge axis 25.

Device 27 comprises, for each rod 4, two elastically yielding sector gears 28 and 29; sector gear 28 is formed in one piece with frame 6 and defines, in particular, end wall 11 of relative cup-shaped portion 9; and sector gear 29 is formed in one piece with cover layer 19 of relative rod 4, and defines a longitudinal end portion of relative rod 4. Sector gears 28 and 29, in use, cooperate mutually in sliding manner, and comprise respective rounded teeth 30 housed inside relative cavity 13; and the teeth 30 of sector gear 29 form an axial extension of relative rod 4.

Sector gear 29 is thicker than relative cover layer 19, and, in the example shown in Figure 2, is positioned contacting an end portion 31 of core 18 of relative rod 4. Alternatively, as shown in Figure 3, sector gear 29 is bridge-shaped and extends axially detached from relative core 18 to define a chamber 32 together with core 18 and a tubular portion of cover 19.

As will be clear from the foregoing description, the angular position of supporting body 3 is adjusted with respect to rod 4 about axis 25 by simply rotating supporting body 3 about axis 25. When so rotated, in fact, each tooth 30 of sector gear 28 slides in contact with a corresponding tooth 30 of sector gear 29, so as to elastically deform one or both sector gears 28, 29 and click past tooth 30 to hold supporting body 3 in a stable new angular position.

Unlike known solutions, angular adjustment of headrest 1 is therefore extremely easy and in no way affects any previous height adjustment of supporting body 3. Moreover, the elasticity of sector gears 28 and 29 is such as to maintain contact between sector gears 28 and 29 at all times, regardless of the angular position of supporting body 3, thus preventing any noise emissions.

Unlike known solutions, headrest 1 described therefore comprises a small number of components and, as such, is extremely cheap and fast to produce and assemble.

Clearly, changes may be made to headrest 1 as described herein without, however, departing from the scope of the present invention. In particular, sector gears 28 and 29 may be formed in locations, and made of materials, other than those described by way of example; only one of sector gears 28, 29 may be elastically yielding or deformable, the other corresponding sector gear being substantially rigid and defining, for example, part of core 18 or relative rod 4; and, finally, one of sector gears 28, 29 may comprise a number of teeth other than that shown by way of example, and, at any rate, a sufficient number of teeth to retain supporting body 3 in any one of the angular positions to which body 3 can be set.

## Claims

1. A headrest (1) for a vehicle seat (2), comprising a supporting body (3) for the user's head; a pair of rods (4) for supporting the supporting body (3) and connected to a backrest (5) of a relative seat (2); hinge connecting means (24) for connecting said supporting body (3) to said rods (4) in rotary manner about a hinge axis (25); and adjusting means (27) for adjusting the position of said supporting body (3) with respect to said rods (4) about said hinge axis (25); characterized in that said adjusting means (27) are step adjusting means, and comprise, for each said rod (4), a first (28) and a second (29) sector gear cooperating mutually in sliding manner and connected integrally to said supporting body (3) and to the relative said rod (4) respectively; at least one of said sector gears (28) (29) being elastically deformable to enable said sector gears (28) (29) to rotate in steps with respect to each other.

2. A headrest as claimed in Claim 1, characterized in that both said sector gears (28) (29) are elastically deformable.

3. A headrest as claimed in Claim 1 or 2, characterized in that each said second sector gear (29) defines an axial end portion of the relative said rod (4).

4. A headrest as claimed in Claim 3, characterized in that each said second sector gear (29) comprises a number of teeth (30) projecting axially from the relative said rod (4) to define an extension of the relative rod (4).

5. A headrest as claimed in any one of the foregoing Claims, characterized in that said supporting body (3) comprises a supporting frame (6) connected to said rods (4) by said hinge means (24), and a cushion portion (7) covering said frame (6) ; and in that said first sector gears (28) are formed in one piece with said supporting frame (6); and said cushion portion (7) extends in contact with the first sector gears (28).

6. A headrest as claimed in Claim 5, characterized in that said frame (6) comprises, for each said rod (4), a respective cup-shaped portion (9) defined by an end wall (11); each said first sector gear (28) forming part of the relative said end wall (11); and each said rod (4) having a respective end portion (23) housed in the relative said cup-shaped portion (9) and hinged to the relative cup-shaped portion (9).

7. A headrest as claimed in any one of the foregoing Claims, characterized in that each said rod (4) comprises a metal core (18) and a layer (19) at least partly covering the core (18); each said second sector gear (29) being formed in one piece with the relative said cover layer (19).

8. A headrest as claimed in Claim 7, characterized in that each said second sector gear (29) extends in contact with the relative said core (18).

9. A headrest as claimed in Claim 7, characterized in that each said second sector gear (29) extends detached from said core (18), and defines a cavity (32) together with the core.

10. A headrest as claimed in Claim 9, characterized in that each said second sector gear (29) defines a bridge portion of the relative said rod (4).
